# EUROPEAN PATENT SPECIFICATION

(11) **EP 4 568 231 B1**
(45) Date of publication and mention of the grant of the patent: **17.06.2026**
(21) Application number: 24167366.4
(22) Date of filing: 28.03.2024
(51) Int. Cl.: H04L 67/125, H04L 69/08, H04L 69/18, H04W 4/40, H04W 4/44

(54) **VEHICLE TERMINAL REMOTE CONTROL MEDIATED BY AN INTERNET-OF-VEHICLES PLATFORM**
DURCH EINE INTERNET-DER-FAHRZEUGE-PLATTFORM VERMITTELTE FAHRZEUGENDGERÄTE-FERNSTEUERUNG
TÉLÉCOMMANDE DE TERMINAL DE VÉHICULE À MÉDIATION PAR UNE PLATEFORME DE L'INTERNET DES VÉHICULES

(30) Priority: 04.12.2023 CN 202311652163
(43) Date of publication of application: 11.06.2025
(73) Proprietor: Deepal Automobile Technology Co., Ltd., Chongqing 401133 (CN)
(72) Inventor: DUAN, Peng, Chongqing 400023 (CN); WANG, Pengfei, Chongqing 400023 (CN); HE, Gang, Chongqing 400023 (CN); YI, Gang, Chongqing 400023 (CN)
(74) Representative: Groth & Co. KB

(56) References cited:
- CN-A- 114 979 231
- CN-B- 113 741 408
- US-A1- 2019 026 478

## Description

### TECHNICAL FIELD

An embodiment of the present disclosure relates to the technical field of automobile remote control, in particular to a vehicle terminal remote control method and system, an electronic device and a storage medium.

### BACKGROUND

With the increasingly flexible and personalized remote control scenarios of intelligent automobiles, the development of app-vehicle cloud platform-vehicle terminal is very inefficient, maintenance costs are also very high, the coupling between systems is also very high, especially for traditional vehicle companies, there are significant functional differences between vehicle models and vehicle series in a case that new energy vehicles and fuel vehicles are parallel, and a corresponding remote control function needs to be developed for each vehicle model, which incurs high labor costs.

US 2019/0026478 A1 discloses a vehicle security communication method and apparatus, a vehicle multimedia system, and a vehicle. US 2019/0026478 A1 discloses that the vehicle includes an open system, a security chip and a closed system, the open system is connected to the closed system through the security chip, the method is applied to the security chip, and the method includes: receiving a first vehicle data instruction from the closed system, where the first vehicle data instruction includes original vehicle data; encrypting the original vehicle data to obtain corresponding encrypted vehicle data; and replacing the original vehicle data in the first vehicle data instruction with the encrypted vehicle data to form a second vehicle data instruction, and sending the second vehicle data instruction to the open system.

CN 114979231 A discloses, according to a machine translation thereof into English, a mobile terminal real-time vehicle control method and system based on a whole vehicle DDS protocol and an automobile, a unified whole vehicle service platform is provided, universal whole vehicle control service is provided for a TBOX based on the whole vehicle service platform, the whole vehicle service platform adopts a DDS communication bus, the TBOX is used as a DDS node, and the whole vehicle service platform adopts a DDS communication bus and a DDS communication bus.

CN 113741408 A discloses, according to a machine translation thereof into English, a remote vehicle control device and method, electronic equipment and a computer readable storage medium. According to said machine translation of CN 113741408 A, the remote vehicle control method comprises the following steps that a remote control instruction is received, and the remote control instruction comprises an instruction number or an instruction name and vehicle control parameters; according to the instruction number or the instruction name, a vehicle control rule corresponding to the instruction number or the instruction name is determined from a pre-created rule base, and the vehicle control rule comprises conditions and actions; whether the vehicle control parameters conform to conditions corresponding to the vehicle control rules or not is determined; and when the vehicle control parameters meet the conditions corresponding to the vehicle control rules, corresponding actions are executed.

### SUMMARY OF THE INVENTION

The present invention is defined by the independent claims. Embodiments are defined by the dependent claims.

Embodiments of the present disclosure provide a vehicle terminal remote control method and system, an electronic device and a storage medium, which are intended to lower the development cost and development difficulty for vehicle remote control.

A first aspect of embodiments of the present disclosure provides a vehicle terminal remote control method, applied to an internet-of-vehicles platform, and comprising:
receiving an application terminal instruction sent by a first standard software kit of an application terminal;
determining a device terminal instruction and a target device terminal corresponding to the application terminal instruction according to a target mapping relationship;
sending the device terminal instruction to the target device terminal so as to control a second standard software kit in the target device terminal to determine a vehicle terminal control instruction corresponding to the device terminal instruction on the basis of an execution file in the target device terminal; and
controlling a target controller in the target device terminal to execute a corresponding control operation according to the vehicle terminal control instruction.

Optionally, prior to receiving the application terminal instruction sent by the first standard software kit of the application terminal, the method further comprises:
constructing respective device terminal object models corresponding to vehicle models so as to obtain respective model definition files corresponding to the vehicle models; and
sending, according to vehicle models corresponding to the respective model definition files respectively, the respective model definition files to second standard software kits of device terminals in the respective corresponding vehicle models so as to let the respective model definition files be parsed to obtain execution files in the respective device terminals.

Optionally, prior to receiving the application terminal instruction sent by the first standard software kit of the application terminal, the method further comprises:
determining, according to a vehicle model corresponding to the application terminal, a list of remote control functions and vehicle condition query functions corresponding to the vehicle model;
determining, according to the list of remote control functions and vehicle condition query functions, an instruction list for the vehicle model; and
constructing, according to the instruction list, application terminal function codes of the application terminal, and sending the application terminal function codes to the first standard software kit integrated in a target application program of the application terminal.

Optionally, the step of determining a device terminal instruction and a target device terminal corresponding to the application terminal instruction according to a target mapping relationship comprises:
obtaining an instruction code and a vehicle identification code from the application terminal instruction by parsing the application terminal instruction;
determining the device terminal instruction corresponding to the instruction code according to the target mapping relationship, the target mapping relationship being a one-to-one correspondence relationship between respective instruction codes and respective device terminal instructions; and
determining, according to the vehicle identification code, the target device terminal corresponding to the vehicle identification code.

Optionally, the step of controlling a second standard software kit in the target device terminal to determine a vehicle terminal control instruction corresponding to the device terminal instruction on the basis of an execution file in the target device terminal comprises:
controlling the second standard software kit in the target device terminal to determine a vehicle terminal instruction code corresponding to the device terminal instruction and an execution condition corresponding to the vehicle terminal instruction code on the basis of the execution file in the target device terminal; and
if the execution condition passes validation by the second standard software kit, generating the corresponding vehicle terminal control instruction based on the vehicle terminal instruction code.

Optionally, the method further comprises:
receiving an error code reported by the second standard software kit, the error code being fed back by the target controller executing the vehicle terminal control instruction; and
determining an execution result corresponding to the error code according to the error code, and reporting the execution result to the application terminal.

Optionally, the second standard software kit is one and the same standard software kit that the device terminals of all vehicle models are configured with.

A second aspect of embodiments of the present disclosure provides a vehicle terminal remote control method, applied to a target device terminal, and comprising:
receiving a device terminal instruction;
determining a vehicle terminal control instruction corresponding to the device terminal instruction by a second standard software kit according to an execution file, the execution file being obtained by the second standard software kit parsing a model definition file sent by an internet-of-vehicles platform; and
controlling, according to the vehicle terminal control instruction, a corresponding target controller to execute a corresponding control operation.

Optionally, the method further comprises:
determining, by the second standard software kit in the target device terminal based on the execution file in the target device terminal, whether respective received monitoring data meet reporting conditions for reporting respective events; and
if any of the respective monitoring data meets a reporting condition for a target event, reporting the target event.

A third aspect of embodiments of the present disclosure provides a vehicle terminal remote control method, applied to an application terminal, and comprising:
triggering sending of an application terminal instruction by a target application program;
generating the corresponding application terminal instruction by a first standard software kit in the application terminal according to the triggering operation; and
sending the application terminal instruction by the first standard software kit.

Optionally, after receiving the application terminal instruction sent by the first standard software kit of the application terminal, encryption validation is performed on the application terminal instruction, comprising:
receiving an encrypted application terminal instruction obtained by the first standard software kit of the application terminal encrypting a generated application terminal instruction according to an asymmetric cryptographic algorithm;
validating the encrypted application terminal instruction according to the asymmetric cryptographic algorithm; and
if the encrypted application terminal instruction passes validation, executing the step of determining the device terminal instruction and the target device terminal corresponding to the application terminal instruction according to the target mapping relationship.

Optionally, the step of sending the device terminal instruction to the target device terminal so as to control a second standard software kit in the target device terminal to determine a vehicle terminal control instruction corresponding to the device terminal instruction on the basis of an execution file in the target device terminal comprises:
encrypting the device terminal instruction by the asymmetric cryptographic algorithm;
sending an encrypted device terminal instruction to the target device terminal;
controlling the target device terminal to validate the encrypted device terminal instruction based on the asymmetric cryptographic algorithm; and
if the encrypted device terminal instruction passes validation, controlling the second standard software kit in the target device terminal to determine the vehicle terminal control instruction corresponding to the device terminal instruction on the basis of the execution file in the target device terminal.

A fourth aspect of embodiments of the present disclosure provides a vehicle terminal remote control system, applied to an internet-of-vehicles platform, and comprising:
an application terminal instruction receiving module, configured to receive an application terminal instruction sent by a first standard software kit of an application terminal;
a device terminal instruction determining module, configured to determine a device terminal instruction and a target device terminal corresponding to the application terminal instruction according to a target mapping relationship; and
a device terminal instruction sending module, configured to send the device terminal instruction to the target device terminal so as to control a second standard software kit in the target device terminal to determine a vehicle terminal control instruction corresponding to the device terminal instruction on the basis of an execution file in the target device terminal.

Optionally, the system further comprises:
a model definition file determining module, configured to construct respective device terminal object models corresponding to vehicle models so as to obtain respective model definition files corresponding to the vehicle models; and
a model definition file sending module, configured to send, according to vehicle models corresponding to the respective model definition files respectively, the respective model definition files to second standard software kits of device terminals in the respective corresponding vehicle models so as to let the respective model definition files be parsed to obtain execution files in the respective device terminals.

Optionally, the system further comprises:
a remote-control-function and vehicle-condition-query-function list determining module, configured to determine, according to a vehicle model corresponding to the application terminal, a list of remote control functions and vehicle condition query functions corresponding to the vehicle model;
an instruction list determining module, configured to determine, according to the list of remote control functions and vehicle condition query functions, an instruction list for the vehicle model; and
an application terminal function code constructing module, configured to construct, according to the instruction list, application terminal function codes of the application terminal, and send the application terminal function codes to the first standard software kit integrated in a target application program of the application terminal.

A fifth aspect of embodiments of the present disclosure provides a vehicle terminal remote control system, applied to a target device terminal, and comprising:
a device terminal instruction receiving module, configured to receive a device terminal instruction;
a vehicle terminal control instruction determining module, configured to determine a vehicle terminal control instruction corresponding to the device terminal instruction by a second standard software kit according to an execution file, the execution file being obtained by the second standard software kit parsing a model definition file sent by an internet-of-vehicles platform; and
a control module, configured to control, according to the vehicle terminal control instruction, a corresponding target controller to execute a corresponding control operation.

A sixth aspect of embodiments of the present disclosure provides a vehicle terminal remote control system, applied to an application terminal, and comprising:
an application terminal instruction triggering module, configured to trigger sending of an application terminal instruction by a target application program;
an application terminal instruction generating module, configured to generate the corresponding application terminal instruction by a first standard software kit in the application terminal according to the triggering operation; and
an application terminal instruction sending module, configured to send the application terminal instruction by the first standard software kit.

A seventh aspect of embodiments of the present disclosure provides an electronic device, comprising a memory, a processor, and a computer program stored in the memory and executable on the processor, wherein the computer program, when executed by the processor, causes the processor to perform the vehicle terminal remote control method according to the first aspect of the present disclosure.

An eighth aspect of embodiments of the present disclosure provides a computer-readable storage medium, having a computer program stored therein, wherein the computer program, when executed by a processor, causes the processor to perform the vehicle terminal remote control method according to the first aspect of the present disclosure.

The vehicle terminal remote control method provided by the present disclosure has the following advantages:
the vehicle terminal remote control method provided by the embodiment of the present disclosure is applied to an internet-of-vehicles platform, first, an application terminal instruction sent by a first standard software kit of an application terminal is received; a device terminal instruction and a target device terminal corresponding to the application terminal instruction are determined according to a target mapping relationship; the device terminal instruction is sent to the target device terminal so as to control a second standard software kit in the target device terminal to determine a vehicle terminal control instruction corresponding to the device terminal instruction on the basis of an execution file in the target device terminal, wherein the second standard software kit is one and the same standard software kit that device terminals of all vehicle models will be configured with, that is, one developed second standard software kit may be configured on the device terminals of all the vehicle models; and the target device terminal is controlled to execute a control operation corresponding to the vehicle terminal control instruction according to the vehicle terminal control instruction.

By means of the method, remote control functions that different vehicle models have (e.g., some vehicle models and vehicle series have a function of controlling power-on at a far end, while others do not) are generally different, specific instruction information of vehicle terminal remote control of different vehicle models (e.g., for controlling windows to open, specific remote control instructions among different vehicle models and vehicle series are different) may be different, the method constructs a model definition file corresponding to a vehicle model through the internet-of-vehicles platform, that is, one corresponding model definition file is constructed for one vehicle model, and then respective model definition files are sent by the internet-of-vehicles platform to the second standard software kits of the corresponding vehicle models so as to let the respective model definition files be parsed to create execution files corresponding to the vehicle models respectively, thereby realizing different remote control functions of various vehicle models and different specific instruction information for vehicle terminal remote control. After the device terminals of various vehicle models have own execution files, the vehicle terminal control instruction corresponding to the received device terminal instruction may be determined by the second standard software kits of the device terminals on the basis of the execution files in the device terminals, so that the control over vehicles is realized. As such, in the method, when a remote control function of a vehicle model changes (e.g., there was no remote early power-on control function previously, but now it has this function), engineers just need to adjust an original model definition file of the vehicle model to obtain a new model definition file and send the new model definition file to a second software kit of a device terminal so as to let the new model definition file be parsed to create a new execution file, without secondary development on a vehicle and the device terminal of the vehicle, which may also effectively lower the development cost.

### BRIEF DESCRIPTION OF THE DRAWINGS

In order to explain the technical scheme in the embodiments of the present disclosure more clearly, the drawings needed in the description of the embodiments of the present disclosure will be briefly introduced below. Apparently, the drawings described below only represent some embodiments of the present disclosure. For a person with ordinary skill in the art, other drawings can be obtained according to these drawings without expenditure of creative labor.
FIG. 1 is a flow diagram of a vehicle terminal remote control method shown in an embodiment of the present disclosure.
FIG. 2 is an interaction diagram of an application terminal, a device terminal and an internet-of-vehicles platform in a vehicle terminal remote control method shown in an embodiment of the present disclosure.
FIG. 3 is an architecture diagram of a standard software kit in a vehicle terminal remote control method shown in an embodiment of the present disclosure.
FIG. 4 is a flow diagram of instruction transmission in a vehicle terminal remote control method shown in an embodiment of the present disclosure.
FIG. 5 is a schematic diagram of a vehicle terminal remote control system shown in an embodiment of the present disclosure.

### DETAILED DESCRIPTION OF SPECIFIC EMBODIMENTS

Hereinafter, with reference to the appended drawings in the embodiments of the present disclosure, the technical solutions in the embodiments of the present disclosure will be described clearly and completely. Apparently, the described embodiments only represent part of the embodiments of the present disclosure, but not all of them. Based on the embodiments described in the present disclosure, all other embodiments obtainable by a person with ordinary skill in the art without expenditure of creative labor shall belong to the protection scope of the present disclosure.

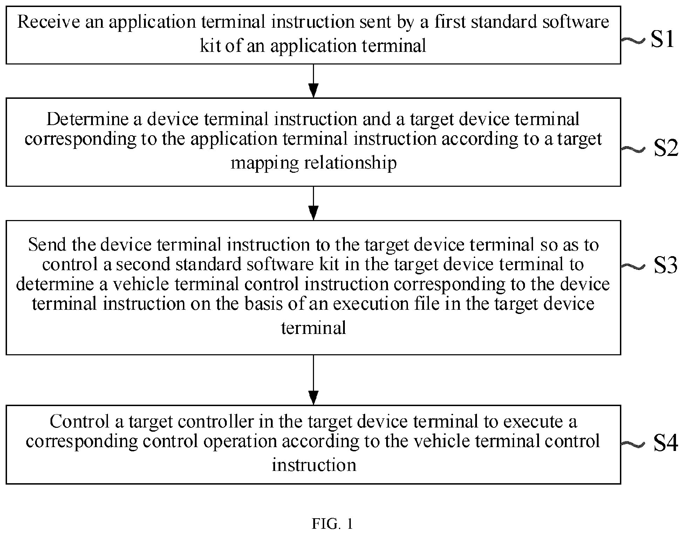

Referring to FIG. 1, FIG. 1 is a flow diagram of a vehicle terminal remote control method shown in an embodiment of the present disclosure. As shown in FIG. 1, the vehicle terminal remote control method of the present embodiment is applied to an internet-of-vehicles platform, and the method may include the following steps:
step S1: an application terminal instruction sent by a first standard software kit of an application terminal is received.

In the present embodiment, first, a user launches the application terminal instruction through the first standard software kit of the application terminal, and the internet-of-vehicles platform will receive the application terminal instruction sent by the first standard software kit of the application terminal. The first standard software kit is used for generating the corresponding application terminal instruction according to a corresponding triggering operation executed by the user, the first standard software kit is preferably a software development kit (SDK), it is to be understood that, this is just a preferred implementation of the first standard software kit, and the first standard software kit may likewise be other application terminal control modules which may be used for generating the corresponding application terminal instruction according to the triggering operation executed by the user.

Step S2: a device terminal instruction and a target device terminal corresponding to the application terminal instruction are determined according to a target mapping relationship.

In the present embodiment, the mapping relationship between application terminal instructions and device terminal instructions is constructed by the internet-of-vehicles platform first, specifically: due to the differences in functions of different vehicle models and the differences in control signals for the same functions of different vehicle models, the present disclosure first determines the service capability of a device terminal corresponding to a vehicle model through a function list applied to an application terminal of the vehicle model, and then associates corresponding device terminal instructions applied to the device terminal of the vehicle model based on application terminal instructions of the application terminal of the vehicle model. The application terminal includes any one of the following: an application terminal located at a mobile terminal (a mobile phone, an IPAD, a laptop, etc.). Then, the application terminal instruction sent by the application terminal is received, according to the predefined target mapping relationship between the application terminal instructions and the device terminal instructions, the device terminal instruction corresponding to the application terminal instruction and the target device terminal to which the device terminal instruction is to be sent are determined, and the target device terminal points to a device terminal on a particular vehicle.

Step S3: the device terminal instruction is sent to the target device terminal so as to control a second standard software kit in the target device terminal to determine a vehicle terminal control instruction corresponding to the device terminal instruction on the basis of an execution file in the target device terminal.

In the present embodiment, the determined device terminal instruction is sent to the determined target device terminal, the second standard software kit in the target device terminal will determine the vehicle terminal control instruction corresponding to the device terminal instruction on the basis of the execution file which is generated in advance, and the vehicle terminal control instruction will be used for controlling a target controller corresponding to a vehicle to execute a corresponding control operation finally. The second standard software kit is used for parsing the model definition file and the device terminal instruction received by the device terminal, the second standard software kit is preferably a software development kit (SDK), it is to be understood that, this is just a preferred implementation of the second standard software kit, and the second standard software kit may likewise be other device terminal control modules which may be used for parsing the model definition file and the device terminal instruction received by the device terminal. The second standard software kit is configured for the device terminal first before the vehicle terminal remote control method of the present application can implement preparation work that has been done previously, namely before the vehicle terminal remote control method of the present application can be implemented, and the second standard software kit just needs to be configured once. The second standard software kit may determine the vehicle terminal control instruction corresponding to the received device terminal instruction based on the execution file, and a specific determining implementation will be illustrated in subsequent embodiments.

Step S4: the target controller in the target device terminal is controlled to execute the corresponding control operation according to the vehicle terminal control instruction.

In the present embodiment, after the second standard software kit of the target device terminal determines the vehicle terminal control instruction corresponding to the device terminal instruction, the second standard software kit is controlled to send the vehicle terminal control instruction to the corresponding target controller to execute the corresponding control operation, for example, a controller for controlling a window at a driver seat of a vehicle is controlled according to the vehicle terminal control instruction to execute a window closing operation.

In the present embodiment, when the application terminal and the device terminal are connected to the internet-of-vehicles platform, identification authentication needs to be conducted for both to guarantee the reliability of information transmission. The internet-of-vehicles platform provides two identity authentication methods: one-way authentication and two-way authentication, a server side provides brokers of emqx, and acls of the application terminal and the device terminal may be configured. One-way authentication is that the device terminal and the application terminal which both serve as clients will verify a certificate of the internet-of-vehicles platform which serves as the server side, and the internet-of-vehicles platform serving as the server side will verify whether a token of a client is effective or not. Two-way authentication is that the client will verify a certificate of the server side, and the server side will also verify a certificate of the client. Authentication certificates connected to one-way authentication and two-way authentication are encapsulated in the standard software kits of the application terminal and the device terminal, and a basic connection capability is constructed to achieve function development based on a device terminal object model, and ensure two-way authentication between the device terminal and the internet-of-vehicles platform as well as between the application terminal and the internet-of-vehicles platform on the basis of the certificates. Time stamps and digital signatures are added in requests and responses made by the device terminal and the application terminal with the internet-of-vehicles platform respectively to validate the completeness and sources of data, so as to prevent replay attacks or temper attacks. A preferred implementation for certificate generation is to adopt a GM SM2 algorithm for generation, and it is to be understood that this is just a preferred implementation, there may likewise be other generation methods for certificate generation, which is not specifically limited here.

In the present embodiment, in the case that respective controllers in a vehicle are connected by a CAN bus, the vehicle terminal control instruction corresponding to the device terminal instruction determined by the second standard software kit of the device terminal is a corresponding CAN message, after the CAN message is obtained, the second standard software kit sends the CAN message to the CAN bus, and the CAN message will be transmitted by the CAN bus to corresponding target controllers to execute corresponding control operations. The application terminal, the internet-of-vehicles platform and the device terminal of the vehicle communicate with one another based on the MQTT communication protocol preferably, and it is to be understood that this is just a preferred implementation, and the application terminal, the internet-of-vehicles platform and the device terminal of the vehicle may likewise communicate with one another based on HTTPS and the like.

The vehicle terminal remote control method provided by the embodiment of the present disclosure is applied to the internet-of-vehicles platform, first, the application terminal instruction sent by the first standard software kit of the application terminal is received; the device terminal instruction and the target device terminal corresponding to the application terminal instruction are determined according to the target mapping relationship; the device terminal instruction is sent to the target device terminal so as to control the second standard software kit in the target device terminal to determine the vehicle terminal control instruction corresponding to the device terminal instruction on the basis of the execution file in the target device terminal, wherein the second standard software kit is one and the same standard software kit that device terminals of all vehicle models will be configured with, that is, one developed second standard software kit may be configured on the device terminals of all the vehicle models; and the target device terminal is controlled to execute the control operation corresponding to the vehicle terminal control instruction according to the vehicle terminal control instruction.

By means of the method, remote control functions that different vehicle models have (e.g., some vehicle models and vehicle series have a function of controlling power-on at a far end, while others do not) are generally different, specific instruction information of vehicle terminal remote control of different vehicle models (e.g., for controlling windows to open, specific remote control instructions among different vehicle models and vehicle series are different) may be different, the method constructs a model definition file corresponding to a vehicle model through the internet-of-vehicles platform, that is, one corresponding model definition file is constructed for one vehicle model, and then respective model definition files are sent by the internet-of-vehicles platform to the second standard software kits of the corresponding vehicle models so as to let the respective model definition files be parsed to create execution files corresponding to the vehicle models respectively, thereby realizing different remote control functions of various vehicle models and different specific instruction information for vehicle terminal remote control. After the device terminals of various vehicle models have own execution files, the vehicle terminal control instruction corresponding to the received device terminal instruction may be determined by the second standard software kits of the device terminals on the basis of the execution files in the device terminals, so that the control over vehicles is realized. As such, in the method, when a remote control function of a vehicle model changes (e.g., there was no remote early power-on control function previously, but now it has this function), engineers just need to adjust an original model definition file of the vehicle model to obtain a new model definition file and send the new model definition file to a second software kit of a device terminal so as to let the new model definition file be parsed to create a new execution file, without secondary development on a vehicle and the device terminal of the vehicle, which may also effectively lower the development cost.

In combination with the above embodiment, in an implementation, an embodiment of the present disclosure further provides a vehicle terminal remote control method. In the method, determination of model definition files includes step S001 to step S002:
step S001: respective device terminal object models corresponding to vehicle models are constructed to obtain respective model definition files corresponding to the vehicle models.

In the present embodiment, before vehicle terminal remote control is carried out, preparation work for a device terminal of a vehicle side is carried out first, specifically: as different vehicle models have different remote control functions, first, for respective vehicle models, lists of remote control functions and vehicle condition query functions corresponding to the respective vehicle models respectively are determined at an internet-of-vehicles platform, remote control refers to remotely controlling functions executed by the device terminal, for example, remotely controlling a vehicle to turn on an air conditioner in advance, remotely controlling the vehicle to open windows in advance, etc., and the lists of vehicle condition query functions refer to vehicle condition information that may be fed back to an application terminal, such as a current temperature inside a vehicle, current residual capacity and/or fuel capacity of the vehicle, etc.

In the present embodiment, as the construction of the device terminal object model of each vehicle model is the same, the construction of the device terminal object model is illustrated by taking one vehicle model as an example. According to a list of remote control functions and vehicle condition (attribute) query functions of the vehicle model, the device terminal object model corresponding to the vehicle model is constructed, function models for attributes of respective devices of a vehicle, vehicle terminal control instructions, event reporting, etc. are defined in the device terminal object model, that is, a function of feeding current attributes of the respective devices to a device terminal and the internet-of-vehicles platform is defined, a function of the respective vehicle terminal control instructions for controlling a vehicle terminal to execute corresponding control operations is defined, and an event reporting function at the time when a vehicle condition of a vehicle meets a certain condition is defined. A corresponding model definition file is generated based on the constructed device terminal object model. Based on the same implementation, one corresponding model definition file will be constructed for each vehicle model by the internet-of-vehicles platform, that is, the types of the vehicle models and the model definition files are in a one-to-one correspondence relationship, one vehicle model has one corresponding model definition file, and with different remote control functions of the vehicle models and/or different specific instruction information for vehicle terminal remote control, the model definition files are also different.

Step S002: according to vehicle models corresponding to the respective model definition files respectively, the respective model definition files are sent to second standard software kits of device terminals in the respective corresponding vehicle models so as to let the respective model definition files be parsed to obtain execution files in the respective device terminals.

In the present embodiment, after the internet-of-vehicles platform has constructed the model definition files corresponding to the vehicle models, the internet-of-vehicles platform sends the respective model definition files to the device terminals of the respective corresponding vehicle models, and after the respective device terminals receive the model definition files, the received model definition files are parsed by the second standard software kits in the device terminals to obtain the execution files in the device terminals of the vehicles. After having the execution files and the second standard software kits, the device terminals of the respective vehicles have the abilities of executing respective supported vehicle terminal control instructions.

In the present embodiment, the respective model definition files include pre-limiting conditions corresponding to respective reporting events and respective device terminal instructions respectively, reporting of the events is triggered only when the respective reporting events meet own pre-limiting conditions, and generation of the vehicle terminal control instructions corresponding to the device terminal instructions is triggered and the corresponding target controllers are controlled to execute the corresponding control operations only when the respective device terminal instructions meet own pre-limiting conditions. For example, an air conditioner is remotely started, whether a vehicle is at an off gear, whether the vehicle is in a remote start status and whether the vehicle is in an engine startup inhibition status need to be judged, that is, PowerStatusFeedback=0 or PEPS_RemoteStartReq=1 and EngineStartupInhibitSts=0. After the above conditions are met, TBOX_RemoteEngineStartupReq=1 and TBOX_RemoteStartRunTime=start time issued by the cloud are issued. Then whether an engine is successfully started is judged, that is, PEPS_RemoteStartFeedback=1. The air conditioner is started after the engine is successfully started, and TBOX_RemoteAirCleanReq=1 and TBOX_RemoteACStartupReq=1 are issued. Then whether the air conditioner is successfully started is judged, that is, AC_RemoteStartFeedback=1. When startup fails, feedback information of startup failure is fed back to the application terminal by the internet-of-vehicles platform.

In the present embodiment, it is to be understood that before the model definition files are parsed to obtain the corresponding execution files, the second standard software kit further needs to be configured for the device terminal of each vehicle, and only after the device terminals of the respective different vehicle models and vehicle series all have the respective second standard software kits, can they have the abilities of parsing the respective received model definition files to create the respective execution files.

In the present embodiment, an exclusive signature encryption mechanism for the device terminals is added for the model definition files, and different device terminals perform encryption by adopting different secret keys, thereby avoiding plaintext transmission of the model definition files and ensuring the safety of the model definition files. Specifically, the second standard software kit configured for a corresponding vehicle model has a corresponding decryption secret key, and can only perform a decryption operation on the model definition file corresponding to own vehicle model, thereby avoiding the issue that this vehicle model receives the model definition files of other vehicle models and parses the model definition files to create the corresponding execution files.

In the present embodiment, the execution files that are based on by the respective vehicle models for performing vehicle remote control can be used for achieving all remote control functions included by the execution files subsequently after one time of configuration. When the remote control functions of a vehicle model change (e.g., some remote control functions are added), the internet-of-vehicles platform just needs to adjust the original model definition file corresponding to the vehicle model and vehicle series and send the adjusted model definition file to the second standard software kit of the device terminal of the vehicle model so as to parse the model definition file to create a new execution file.

In combination with the above embodiment, in an implementation, an embodiment of the present disclosure further provides a vehicle terminal remote control method. In the method, determination of a first standard software kit of an application terminal includes step S01 to step S03:
step S01: according to a vehicle model corresponding to the application terminal, a list of remote control functions and vehicle condition query functions corresponding to the vehicle model is determined.

In the present embodiment, step S01 to step S03 are preparation work before implementing the technical solution corresponding to step S1 to S6, and the preparation work is sending application terminal function codes to the first standard software kit in a target application program at an application terminal side in advance. As different application terminals control different vehicle models, while different vehicle models have different control functions, first, according to a vehicle model controlled by the application terminal, the list of remote control functions and vehicle condition query functions corresponding to the vehicle model is determined at an internet-of-vehicles platform.

Step S02: according to the list of remote control functions and vehicle condition query functions, an instruction list for the vehicle model is determined.

In the present embodiment, a uniform instruction library is maintained by the internet-of-vehicles platform, and after the list of remote control functions and vehicle condition query functions of the vehicle model controlled by the application terminal is determined, according to the list of remote control functions and vehicle condition query functions, instructions corresponding to respective remote control functions and respective vehicle condition query functions in the list of remote control functions and vehicle condition query functions respectively are selected from the uniform instruction library to create the instruction list corresponding to the vehicle model. Based on the same implementation, each vehicle model will create one corresponding instruction list according to different own functions, that is, the vehicle models and the instruction lists have a one-to-one correspondence relationship, and each vehicle model will have one corresponding instruction list.

Step S03: according to the instruction list, the application terminal function codes of the application terminal are constructed, and the application terminal function codes are sent to the first standard software kit integrated in the target application program of the application terminal.

In the present embodiment, on the basis of the respective instruction lists determined in step S02, the application terminal function codes corresponding to the respective instruction lists are constructed. The application terminal function codes are a string of JSON character string codes, and are used for configuring remote control functions of respective target application programs. After the application terminal function codes for the respective vehicle models are constructed, according to the vehicle models corresponding to the application terminal function codes, the application terminal function codes are sent to the target application programs in the application terminals used for controlling the corresponding vehicle models, and the remote control functions of the target application programs are configured by the first standard software kits integrated in the target application programs on the basis of the application terminal function codes. The target application programs are used for triggering the sending of the respective application terminal instructions, while the first standard software kits are further used for generating the corresponding application terminal instructions according to triggering operations of the target application programs.

In the present embodiment, the first standard software kits integrated in the target application programs in the application terminals for controlling different vehicle models are the same first standard software kit, and the first standard software kit has the actions including obtaining the application terminal function codes provided by the internet-of-vehicles platform and configuring the remote control functions for the target application programs based on the application terminal codes, and generating the corresponding application terminal instructions according to the triggering operations of the target application programs. In the case that the application terminal function codes are different, the remote control functions configured for the target application programs are also different.

In the present embodiment, applying the first standard software kit at the application terminals has the advantages that: in the case that the vehicle models and vehicle series controlled by the application terminals are different, the corresponding remote control functions also have differences, and thus the development cost for developing corresponding complete control application programs for various vehicle models and vehicle series having different remote control functions at present is very high. By means of the implementation of the present application, only one first standard software kit needs to be constructed for various vehicle models and vehicle series having different remote control functions, and then the one first standard software kit is integrated in the target application programs in the application terminals for controlling various vehicle models. For any one target application program, the first standard software kit in this target application program is used for obtaining the application terminal function codes corresponding to the vehicle model controlled by the target application program from the internet-of-vehicles platform, and then the first standard software kit is used for configuring the remote control functions for the target application program on the basis of the obtained application terminal function codes. In this way, there is no need to develop complete control application programs for various vehicle models and vehicle series having different remote control functions respectively, thereby avoiding the issue that development of a network layer, a service layer, an API layer and an application layer needs to be performed in the development process when complete application programs are developed for application terminals of various vehicle models and vehicle series having different remote control functions, and thus the development cost can be effectively lowered. Meanwhile, when a remote control function of an application terminal controlling a certain vehicle model changes, the internet-of-vehicles platform sends new application terminal function codes to target application programs of respective application terminals corresponding to the vehicle model, such that the first standard software kit in the target application programs may update remote control functions supported by the target application programs on the basis of the new application terminal function codes.

In combination with the above embodiment, in an implementation, an embodiment of the present disclosure further provides a vehicle terminal remote control method. In the method, step S2 includes step S21 to step S23:
step S21: an instruction code and a vehicle identification code are obtained from the application terminal instruction by parsing the application terminal instruction.

In the present embodiment, an internet-of-vehicles platform parses the received application terminal instruction to obtain a vehicle identification code (carid) for determining which vehicle is specifically controlled by the application terminal instruction, and an instruction code for identifying the application terminal instruction.

Step S22: a device terminal instruction corresponding to the instruction code is determined according to a target mapping relationship, the target mapping relationship being a one-to-one correspondence relationship between respective instruction codes and respective device terminal instructions.

In the present embodiment, according to the target mapping relationship between application terminal instructions and device terminal instructions which is predefined by the internet-of-vehicles platform, the instruction code of the device terminal instruction corresponding to the instruction code of the application terminal instruction is determined. The corresponding device terminal instruction is determined based on the instruction code of the device terminal instruction. The target mapping relationship records the one-to-one correspondence relationship between respective instruction codes and respective device terminal instructions.

Step S23: according to the vehicle identification code, a target device terminal corresponding to the vehicle identification code is determined.

In the present embodiment, a specific vehicle to be controlled is determined based on the vehicle identification code, thereby determining the target device terminal on the specific vehicle.

In combination with the above embodiment, in an implementation, an embodiment of the present disclosure further provides a vehicle terminal remote control method. In the method, controlling the second standard software kit in the target device terminal to determine the vehicle terminal control instruction corresponding to the device terminal instruction on the basis of the execution file in the target device terminal in step S3 includes step S31 to step S32:
step S31: the second standard software kit in the target device terminal is controlled to determine a vehicle terminal instruction code corresponding to the device terminal instruction and an execution condition corresponding to the vehicle terminal instruction code on the basis of the execution file in the target device terminal.

In the present embodiment, after the internet-of-vehicles platform determines the device terminal instruction and the target device terminal corresponding to the application terminal instruction, the internet-of-vehicles platform sends the device terminal instruction to the target device terminal, and after the target device terminal receives the device terminal instruction, the device terminal instruction is parsed by the second standard software kit of the target device terminal to obtain a signal name therein. The second standard software kit determines the vehicle terminal instruction code corresponding to the device terminal instruction and the corresponding execution condition according to a mapping relationship between signal names and vehicle terminal instruction codes as well as a mapping relationship between vehicle terminal instruction codes and execution conditions defined in the execution file.

Step S32: if the execution condition passes validation by the second standard software kit, the corresponding vehicle terminal control instruction is generated based on the instruction code.

In the present embodiment, after the second standard software kit determines the execution condition corresponding to the vehicle terminal instruction code, whether a current vehicle state meets the execution condition is determined, for example, in the case that the vehicle terminal control instruction is turning on an air conditioner, whether an engine of a vehicle is started is determined. If the execution condition is not met, it is determined that the execution condition does not pass validation, and at the moment, the subsequent generation of the corresponding vehicle terminal control instruction based on the vehicle terminal instruction code is not carried out. If the execution condition is met, it is determined that the execution condition passes validation, and at the moment, the subsequent generation of the corresponding vehicle terminal control instruction based on the vehicle terminal instruction code is carried out.

In the present embodiment, in the case that respective controllers in a vehicle are connected through a CAN bus, the above vehicle terminal instruction code is a CAN signal value correspondingly, the above vehicle terminal control instruction is a CAN message, and at the moment, a specific implementation of above step S31 to step S32 is that: a CAN signal value corresponding to the signal name of the device terminal instruction and an execution condition corresponding to the CAN signal value are determined according to the execution file, and after the execution condition passes validation, target information corresponding to the CAN signal value is determined based on a DBC file in a CAN network protocol, that is, which controller needs to be controlled by the CAN signal value is determined through the DBC file. After the target information is obtained, a complete CAN message is generated based on the target information and the CAN signal value. The DBC file (Database CAN) is a database file of a CAN, which is a file for describing a CAN communication list. The target information at least includes: a CANID, a signal length, and signal start bit information.

In combination with the above embodiment, in an implementation, an embodiment of the present disclosure further provides a vehicle terminal remote control method. In the method, the method further includes step S5 to step S6:
step S5: an error code reported by the second standard software kit is received, the error code being determined based on feedback information of a target controller executing the vehicle terminal control instruction.

In the present embodiment, after the vehicle terminal control instruction controls the corresponding target controller to execute a corresponding control operation, this controller feeds back corresponding feedback information to the second software kit, and the second standard software kit determines the corresponding error code based on the feedback information and reports the error code to an internet-of-vehicles platform.

Step S6: an execution result corresponding to the error code is determined according to the error code, and the execution result is reported to the application terminal.

In the present embodiment, after the internet-of-vehicles platform receives the error code, the execution result corresponding to the error code is determined and reported to the application terminal so as to feed back to a user whether a currently executed control operation succeeds or fails, and the user is prompted what errors occur when the control operation fails. It is to be understood that, all error codes further include a corresponding code of successful execution.

In combination with the above embodiment, in an implementation, an embodiment of the present disclosure further provides a vehicle terminal remote control method. In the method, the second standard software kits are the same standard software kit configured for device terminals of all vehicle models.

In the present embodiment, as the second standard software kits configured on different vehicle models are used for parsing respective received model definition files and determining vehicle terminal control instructions corresponding to received device terminal instructions on the basis of respective execution files obtained by parsing the respective model definition files, the second standard software kits configured on the different vehicle models may be the same standard software kit, as long as the standard software kit has the above two abilities, therefore, in order to lower the development cost, the second standard software kits configured on the different vehicle models in the present application are preferably the same standard software kit, that is, the second standard software kits configured for all the vehicle models are the same standard software kit, and it is to be understood that this is just a preferred implementation of the second standard software kits, and the second standard software kits configured for the different vehicle models may likewise be different standard software kits. Meanwhile, it is to be understood that, as the second standard software kits configured for the different vehicle models have decryption secret keys which can only decrypt the model definition files corresponding to the vehicle models, the second standard software kits configured for the different vehicle models at least have the difference in decryption secret keys for decrypting the model definition files above.

In combination with the above embodiment, in an implementation, an embodiment of the present disclosure further provides a vehicle terminal remote control method. In the method, step S1 may include: performing encryption validation on the application terminal instruction after the application terminal instruction sent by the first standard software kit of the application terminal is received. Specifically, step S1 includes step S11 to step S13:
step S11: an encrypted application terminal instruction obtained by the first standard software kit of the application terminal encrypting a generated application terminal instruction according to an asymmetric cryptographic algorithm is received.

In the present embodiment, the first standard software kit is integrated in a target application program of the application terminal, and the first standard software kit generates the corresponding application terminal instruction on the basis of a received triggering operation of the target application program.

In the present embodiment, in order to ensure that information is safe and reliable in the transmission process and cannot be stolen and tampered, the information in the transmission process is encrypted by the asymmetric cryptographic algorithm in the present disclosure, and only a public key for a vehicle terminal and an internet-of-vehicles platform is exposed, thereby achieving authentication of both parties to prevent masquerading or counterfeit. Specifically: after the first standard software kit of the application terminal generates the corresponding application terminal instruction, the application terminal instruction is encrypted by adopting the asymmetric cryptographic algorithm, then the encrypted application terminal instruction is sent to the internet-of-vehicles platform by the first standard software kit of the application terminal, and the internet-of-vehicles platform receives the encrypted application terminal instruction.

Step S12: the encrypted application terminal instruction is validated according to the asymmetric cryptographic algorithm.

In the present embodiment, after receiving the encrypted application terminal instruction, the internet-of-vehicles platform performs validity validation on the encrypted application terminal instruction based on the asymmetric cryptographic algorithm to determine whether the application terminal instruction is a stolen and/or tampered application terminal instruction and/or is an application terminal instruction sent by an illegal application terminal.

Step S13: if the encrypted application terminal instruction passes validation, step S2 is executed.

In the present embodiment, if the encrypted application terminal instruction passes the validity validation, step S2 of the present disclosure is executed.

In combination with the above embodiment, in an implementation, an embodiment of the present disclosure further provides a vehicle terminal remote control method. In the method, step S3 includes step S301 to step S304:
step S301: the device terminal instruction is encrypted by the asymmetric cryptographic algorithm.

In the present embodiment, after the internet-of-vehicles platform determines the device terminal instruction corresponding to the received application terminal instruction based on the target mapping relationship between application terminal instructions and device terminal instructions, the device terminal instruction is encrypted by the asymmetric cryptographic algorithm.

Step S302: an encrypted device terminal instruction is sent to the target device terminal.

In the present embodiment, the encrypted device terminal instruction is sent to the target device terminal by the internet-of-vehicles platform.

Step S303: the target device terminal is controlled to validate the encrypted device terminal instruction based on the asymmetric cryptographic algorithm.

In the present embodiment, based on the encrypted device terminal instruction sent to the target device terminal, the target device terminal is controlled to perform validity validation on the encrypted device terminal instruction based on the asymmetric cryptographic algorithm to determine whether the device terminal instruction is a stolen and/or tampered device terminal instruction and/or is a device terminal instruction sent by an illegal device terminal.

Step S304: if the encrypted device terminal instruction passes validation, the second standard software kit in the target device terminal is controlled to determine the vehicle terminal control instruction corresponding to the device terminal instruction on the basis of the execution file in the target device terminal.

In the present embodiment, if the encrypted device terminal instruction passes the validity validation, the target device terminal is controlled to parse the obtained device terminal instruction by the second standard software kit based on the execution file, so as to obtain the vehicle terminal control instruction.

In combination with the above embodiment, in an implementation, an embodiment of the present disclosure further provides a vehicle terminal remote control method. The vehicle terminal remote control method is applied to a target device terminal, and includes:
Step S021: a device terminal instruction is received.

In the present embodiment, the target device terminal receives the device terminal instruction sent by an internet-of-vehicles platform.

Step S022: a vehicle terminal control instruction corresponding to the device terminal instruction is determined by a second standard software kit according to an execution file, the execution file being obtained by the second standard software kit parsing a model definition file sent by the internet-of-vehicles platform.

In the present embodiment, after the target device terminal receives the device terminal instruction sent by the internet-of-vehicles platform, the second standard software kit in the target device terminal determines the vehicle terminal control instruction corresponding to the device terminal instruction according to the execution file in the target device terminal, and the execution file in the target device terminal is obtained, by the second standard software kit in the target device terminal, by parsing the model definition file sent by the internet-of-vehicles platform to the target device terminal.

Step S023: a corresponding target controller is controlled according to the vehicle terminal control instruction to execute a corresponding control operation.

In the present embodiment, after the second standard software kit determines the corresponding vehicle terminal control instruction, the vehicle terminal control instruction is sent to the target controller used for executing the vehicle terminal control instruction, so as to make the target controller execute the corresponding control operation.

In combination with the above embodiment, in an implementation, an embodiment of the present disclosure further provides a vehicle terminal remote control method. In the method, the method further includes step S024 to step S025:
step S024: the second standard software kit in the target device terminal determines whether respective received monitoring data meet reporting conditions for reporting respective events based on the execution file in the target device terminal.

In the present embodiment, a function of reporting the respective events and the corresponding reporting conditions for reporting the respective events are defined in the execution file. According to the execution file, the second standard software kit of the target device terminal may determine whether the respective received monitoring data of a vehicle meet the reporting conditions for reporting the respective events recorded in the execution file.

Step S025: if any of the respective monitoring data meets a reporting condition for a target event, the target event is reported.

In the present embodiment, an event meeting the reporting condition is called the target event, and therefore, when it is determined that monitoring results of the respective monitoring data meet the reporting condition for one event, the one event is determined as the target event, and the target event is reported to the internet-of-vehicles platform and is fed back to the corresponding application terminal by the internet-of-vehicles platform.

In combination with the above embodiment, in an implementation, an embodiment of the present disclosure further provides a vehicle terminal remote control method which is applied to an application terminal. The method includes step S031 to step S033:
step S031: sending of an application terminal instruction is triggered by a target application program.

In the present embodiment, the target application program is an application program used for vehicle remote control, the target application program itself only involves triggering of the sending of the application terminal instruction, and specifically, a user triggers the sending of the application terminal instruction through the target application program of the application terminal.

Step S032: the corresponding application terminal instruction is generated by a first standard software kit in the application terminal according to the triggering operation.

In the present embodiment, the first standard software kit is integrated in the above target application program, and the first standard software kit generates the corresponding application terminal instruction on the basis of the received triggering operation of the target application program.

Step S033: the application terminal instruction is sent by the first standard software kit.

In the present embodiment, after the first standard software kit generates the application terminal instruction, the application terminal instruction is sent to the internet-of-vehicles platform, such that the internet-of-vehicles platform receives the application terminal instruction.

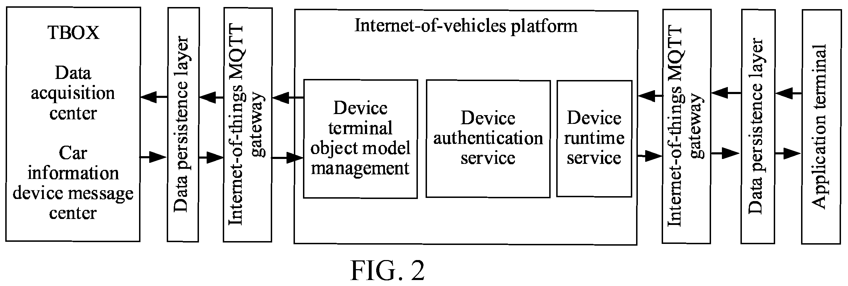

In the above implementation of the present disclosure, FIG. 2 is an interaction diagram of an application terminal, a device terminal and an internet-of-vehicles platform in a vehicle terminal remote control method shown in an embodiment of the present disclosure. As shown in FIG. 2, an application terminal instruction is sent by the application terminal, and the application terminal side further includes a data persistence layer which is used for data storage and also includes an internet-of-things MQTT gateway to enable the application terminal instruction to be sent to the internet-of-vehicles platform by a first standard software kit of an application terminal. Management of device terminal object models is involved in the internet-of-vehicles platform, which is used for constructing the device terminal object models and sending the constructed device terminal object models corresponding to vehicle models to the device terminal of a vehicle through the internet-of-things MQTT gateway, an authentication service for respective devices (device terminals and application terminals) connected with the internet-of-vehicles platform is also involved, and provision of a runtime service for the respective devices is also involved, for example, monitoring for the runtime of the devices is performed to report events when a pre-limiting condition for event reporting is met. The device terminal of the vehicle includes a TBOX, a data acquisition center, a car information device message center and a data persistence layer.

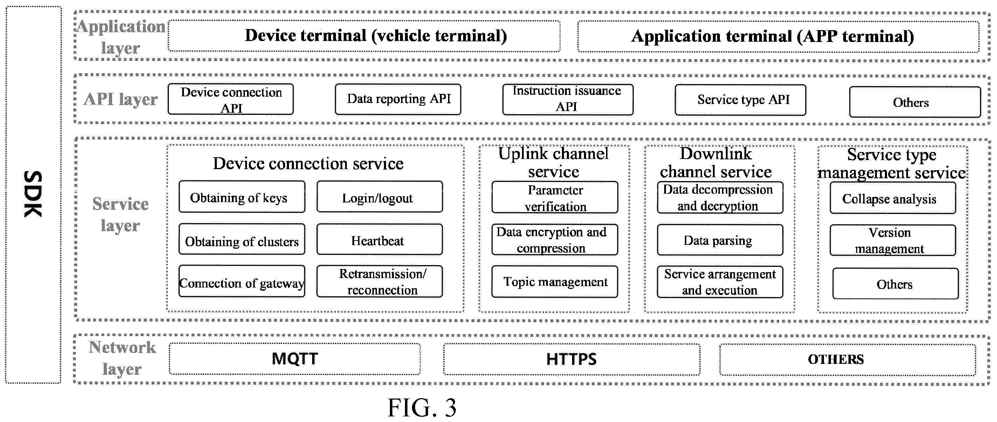

In the above implementation of the present disclosure, FIG. 3 is an architecture diagram of a standard software kit in a vehicle terminal remote control method shown in an embodiment of the present disclosure. As shown in FIG. 3, the standard software kit in the present disclosure includes an application layer, an API layer, a service layer and a network layer. The application layer includes an application layer of device terminals and an application layer of application terminals. The network layer includes an MQTT communication protocol, HTTPS and other protocols. The service layer includes a device connection service used for login and logout of devices and the like, an uplink channel service used for performing parameter verification and data encryption and compression and uploading encrypted and compressed data, a downlink channel service used for decompressing and decrypting received data and performing data parsing and service arrangement and execution, and a service type management service which includes analysis of collapse in a transmission process, version management and the like.

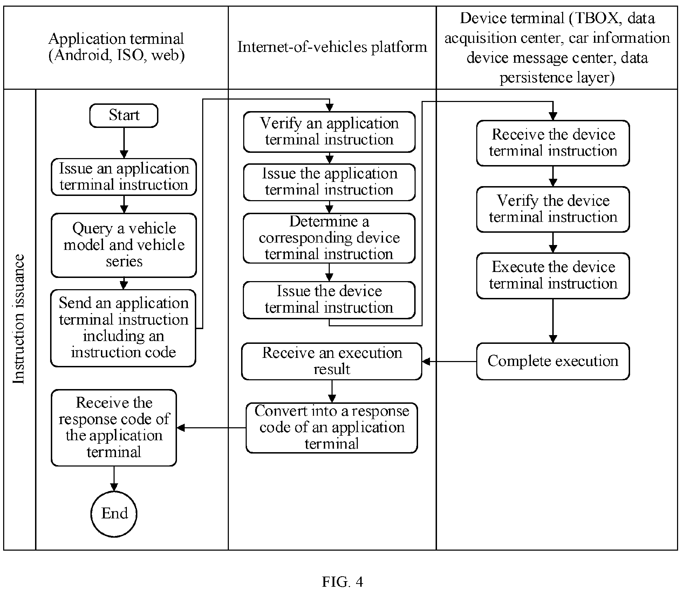

In the above implementation of the present disclosure, FIG. 4 is a flow diagram of instruction transmission in a vehicle terminal remote control method shown in an embodiment of the present disclosure. As shown in FIG. 4, an application terminal instruction is issued by an application terminal, a first standard software kit of an application terminal performs vehicle model and vehicle series query, an instruction code of the application terminal instruction under a vehicle model and vehicle series and a vehicle identification code of a vehicle where the application terminal is located are determined based on the vehicle model and vehicle series, and then the application terminal instruction including the instruction code and the vehicle identification code is issued to an internet-of-vehicles platform. The internet-of-vehicles platform validates the application terminal instruction, after the application terminal instruction passes the validation and is determined to be legal, a device terminal instruction corresponding to the application terminal instruction is determined according to a mapping relationship between application terminal instructions and device terminal instructions, and the device terminal instruction is sent to a corresponding device terminal in a manner of topic subscription. The device terminal validates the device terminal instruction after receiving the device terminal instruction, after the device terminal instruction passes the validation and is determined to be legal, a CAN message is generated based on the device terminal instruction and used for controlling, and after execution is completed, an error code is fed back to the internet-of-vehicles platform and converted into a response result of the application terminal so as to be fed back to the application terminal.

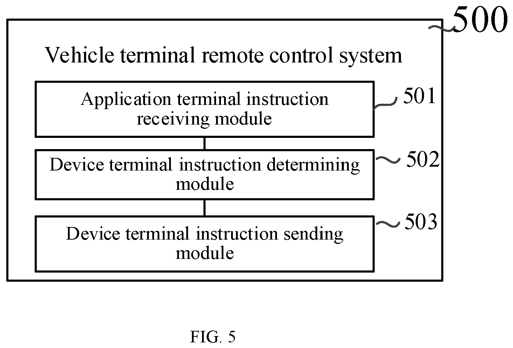

Based on the same inventive concept, another embodiment of the present disclosure provides a vehicle terminal remote control system. As shown in FIG. 5, the system 500 is applied to an internet-of-vehicles platform and comprises:
an application terminal instruction receiving module 501, configured to receive an application terminal instruction sent by a first standard software kit of an application terminal;
a device terminal instruction determining module 502, configured to determine a device terminal instruction and a target device terminal corresponding to the application terminal instruction according to a target mapping relationship; and
a device terminal instruction sending module 503, configured to send the device terminal instruction to the target device terminal so as to control a second standard software kit in the target device terminal to determine a vehicle terminal control instruction corresponding to the device terminal instruction on the basis of an execution file in the target device terminal.

Optionally, the system 500 further comprises:
a model definition file determining module, configured to construct respective device terminal object models corresponding to vehicle models so as to obtain respective model definition files corresponding to the vehicle models; and
a model definition file sending module, configured to send, according to vehicle models corresponding to the respective model definition files respectively, the respective model definition files to second standard software kits of device terminals in the respective corresponding vehicle models so as to let the respective model definition files be parsed to obtain execution files in the respective device terminals.

Optionally, the system 500 further comprises:
a remote-control-function and vehicle-condition-query-function list determining module, configured to determine, according to a vehicle model corresponding to the application terminal, a list of remote control functions and vehicle condition query functions corresponding to the vehicle model;
an instruction list determining module, configured to determine, according to the list of remote control functions and vehicle condition query functions, an instruction list for the vehicle model; and
an application terminal function code constructing module, configured to construct, according to the instruction list, application terminal function codes of the application terminal, and send the application terminal function codes to the first standard software kit integrated in a target application program of the application terminal.

Optionally, the device terminal instruction determining module comprises:
an application terminal instruction parsing module, configured to obtain an instruction code and a vehicle identification code from the application terminal instruction by parsing the application terminal instruction;
a device terminal instruction determining module, configured to determine the device terminal instruction corresponding to the instruction code according to the target mapping relationship, the target mapping relationship being a one-to-one correspondence relationship between respective instruction codes and respective device terminal instructions; and
a target device terminal determining module, configured to determine, according to the vehicle identification code, the target device terminal corresponding to the vehicle identification code.

Optionally, the system 500 further comprises:
an error code receiving module, configured to receive an error code reported by the second standard software kit, the error code being fed back by the target controller executing the vehicle terminal control instruction; and
an execution result reporting module, configured to determine an execution result corresponding to the error code according to the error code, and report the execution result to the application terminal.

Optionally, the second standard software kit in the system 500 is one and the same standard software kit that the device terminals of all vehicle models are configured with.

Optionally, the system 500 further comprises:
a first receiving module, configured to receive an encrypted application terminal instruction obtained by the first standard software kit of the application terminal encrypting a generated application terminal instruction according to an asymmetric cryptographic algorithm;
a first encryption validating module, configured to validate the encrypted application terminal instruction according to the asymmetric cryptographic algorithm; and
an execution module, configured to, if the encrypted application terminal instruction passes validation, execute the step of determining the device terminal instruction and the target device terminal corresponding to the application terminal instruction according to the target mapping relationship.

Optionally, the system 500 further comprises:
a first encrypting module, configured to encrypt the device terminal instruction by the asymmetric cryptographic algorithm;
a first sending module, configured to send an encrypted device terminal instruction to the target device terminal;
a first control module, configured to control the target device terminal to validate the encrypted device terminal instruction based on the asymmetric cryptographic algorithm; and
a second control module, configured to, if the encrypted device terminal instruction passes validation, control the second standard software kit in the target device terminal to determine the vehicle terminal control instruction corresponding to the device terminal instruction on the basis of the execution file in the target device terminal.

Based on the same inventive concept, another embodiment of the present disclosure provides a vehicle terminal remote control system, applied to a target device terminal, and comprising:
a device terminal instruction receiving module, configured to receive a device terminal instruction;
a vehicle terminal control instruction determining module, configured to determine a vehicle terminal control instruction corresponding to the device terminal instruction by a second standard software kit according to an execution file, the execution file being obtained by the second standard software kit parsing a model definition file sent by an internet-of-vehicles platform; and
a control module, configured to control, according to the vehicle terminal control instruction, a corresponding target controller to execute a corresponding control operation.

Optionally, the system further comprises:
a reporting condition determining module, configured to determine, by the second standard software kit in the target device terminal based on the execution file in the target device terminal, whether respective received monitoring data meet reporting conditions for reporting respective events; and
an event reporting module, configured to, if any of the respective monitoring data meets a reporting condition for a target event, report the target event.

Based on the same inventive concept, another embodiment of the present disclosure provides a vehicle terminal remote control system, applied to an application terminal, and comprising:
an application terminal instruction triggering module, configured to trigger sending of an application terminal instruction by a target application program;
an application terminal instruction generating module, configured to generate the corresponding application terminal instruction by a first standard software kit in the application terminal according to the triggering operation; and
an application terminal instruction sending module, configured to send the application terminal instruction by the first standard software kit.

Based on the same inventive concept, another embodiment of the present disclosure provides an electronic device, comprising a memory, a processor, and a computer program stored in the memory and executable on the processor, wherein the computer program, when executed by the processor, causes the processor to perform the vehicle terminal remote control method according to the first aspect of the present disclosure.

Based on the same inventive concept, another embodiment of the present disclosure provides a computer-readable storage medium, having a computer program stored therein, wherein the computer program, when executed by a processor, causes the processor to perform the vehicle terminal remote control method according to the first aspect of the present disclosure.

As for the system embodiments, since they are basically similar to the method embodiments, the description thereof is relatively simple, and the relevant contents can refer to the description of the corresponding parts of the method embodiments.

The respective embodiments in this Specification are described in a progressive manner, and what is emphasized in the description of each embodiment is its difference as compared to other embodiments, while the same or similar parts among the respective embodiments can refer to each other.

Those skilled in the art should understand that the embodiments of the present disclosure may be methods, systems or computer program products. Therefore, the embodiments of the present disclosure may adopt the form of a complete hardware embodiment, a complete software embodiment, or a software and hardware combination embodiment. In addition, the embodiments of the present disclosure may adopt the form of a computer program product implemented on one or more computer-readable storage media (including, but not limited to, a magnetic disk memory, a compact disc read-only memory (CD-ROM), an optical memory and the like) including computer-readable program codes.

The embodiments of the present disclosure are described by referring to flowcharts and/or block diagrams of methods, terminal devices (systems) and computer program products according to the embodiments of the present disclosure. It is understood that computer program instructions can be used to implement each flow and/or each block in the flowcharts and/or the block diagrams and a combination of flows and/or blocks in the flowcharts and/or the block diagrams. These computer program instructions may be provided to a general-purpose computer, a dedicated computer, an embedded processor, or a processor of another programmable data processing terminal device to generate a machine, so that the instructions executed by the computer or the processor of said another programmable data processing terminal device generate an apparatus for implementing a specific function in one or more flows in the flowcharts and/or in one or more blocks in the block diagrams.

These computer program instructions may also be stored in a computer readable memory that can instruct the computer or any other programmable data processing terminal device to work in a specific manner, so that the instructions stored in the computer readable memory generate an artifact that comprises an instruction apparatus. The instruction apparatus implements a specific function in one or more flows in the flowcharts and/or in one or more blocks in the block diagrams.

These computer program instructions may also be loaded onto a computer or another programmable data processing terminal device, so that a series of operations and steps are performed on the computer or said another programmable terminal device, thereby generating computer-implemented processing. Therefore, the instructions executed on the computer or said another programmable terminal device provide steps for implementing a specific function in one or more flows in the flowcharts and/or in one or more blocks in the block diagrams.

Finally, it is worthwhile to note that, herein, relational terms such as first, second, etc. are only used to distinguish one entity or operation from another entity or operation, and do not necessarily require or imply that there is any such actual relation or sequence among these entities or operations. And, the terms "comprise", "include", or any other variation thereof are intended to cover a non-exclusive inclusion, so that a process, a method, an article, or a terminal device that comprises a list of elements comprises those elements and further comprises other elements not expressly listed or other elements inherent to such a process, method, article, or device. Without more constraints, an element defined by "comprises a ..." does not preclude the existence of additional identical elements in the process, method, product, or device that is said to comprise the element.

Hereinabove, the vehicle terminal remote control method and system, the electronic device and the storage medium provided by the present disclosure are described in detail, specific individual examples are used herein to set forth the principle and implementation ways of the present disclosure, and the description of the embodiments above is only intended to help understanding the method of the present disclosure and its core idea; meanwhile, for those with ordinary skill in the art, based on the idea of the present disclosure, various modifications may always be made in aspects of specific implementation ways and application ranges, insofar said modifications do not depart from the scope of the invention as defined by the appended claims.

## Claims

1. A vehicle terminal remote control method, applied to an internet-of-vehicles platform, and comprising:
receiving (S1)
an application terminal instruction sent by a first standard software kit of an application terminal;
determining (S2)
a device terminal instruction and a target device terminal corresponding to the application terminal instruction according to a target mapping relationship;
sending (S3)
the device terminal instruction to the target device terminal so as to control a second standard software kit in the target device terminal to determine a vehicle terminal control instruction corresponding to the device terminal instruction on the basis of an execution file in the target device terminal; and
controlling a target controller in the target device terminal to execute a corresponding control operation according to the vehicle terminal control instruction;
wherein, prior to receiving the application terminal instruction sent by the first standard software kit of the application terminal, the method further comprises:
constructing respective device terminal object models corresponding to vehicle models so as to obtain respective model definition files corresponding to the vehicle models; and
sending, according to vehicle models corresponding to the respective model definition files respectively, the respective model definition files to second standard software kits of device terminals in the respective corresponding vehicle models so as to let the respective model definition files be parsed to obtain execution files in the respective device terminals.

2. The vehicle terminal remote control method according to claim 1, wherein, prior to receiving the application terminal instruction sent by the first standard software kit of the application terminal, the method further comprises:
determining, according to a vehicle model corresponding to the application terminal, a list of remote control functions and vehicle condition query functions corresponding to the vehicle model;
determining, according to the list of remote control functions and vehicle condition query functions, an instruction list for the vehicle model; and
constructing, according to the instruction list, application terminal function codes of the application terminal, and sending the application terminal function codes to the first standard software kit integrated in a target application program of the application terminal.

3. The vehicle terminal remote control method according to claim 2, wherein the step of determining a device terminal instruction and a target device terminal corresponding to the application terminal instruction according to a target mapping relationship comprises:
obtaining an instruction code and a vehicle identification code from the application terminal instruction by parsing the application terminal instruction;
determining the device terminal instruction corresponding to the instruction code according to the target mapping relationship, the target mapping relationship being a one-to-one correspondence relationship between respective instruction codes and respective device terminal instructions; and
determining, according to the vehicle identification code, the target device terminal corresponding to the vehicle identification code.

4. The vehicle terminal remote control method according to claim 3, wherein the step of controlling a second standard software kit in the target device terminal to determine a vehicle terminal control instruction corresponding to the device terminal instruction on the basis of an execution file in the target device terminal comprises:
controlling the second standard software kit in the target device terminal to determine a vehicle terminal instruction code corresponding to the device terminal instruction and an execution condition corresponding to the vehicle terminal instruction code on the basis of the execution file in the target device terminal; and
if the execution condition passes validation by the second standard software kit, generating the corresponding vehicle terminal control instruction based on the vehicle terminal instruction code.

5. The vehicle terminal remote control method according to claim 4, further comprising:
receiving an error code reported by the second standard software kit, the error code being fed back by the target controller executing the vehicle terminal control instruction; and
determining an execution result corresponding to the error code according to the error code, and reporting the execution result to the application terminal.

6. A vehicle terminal remote control method, applied to a target device terminal, and comprising:
receiving (S3) a device terminal instruction from an internet-of-vehicles platform, wherein the device terminal instruction has been determined based on a corresponding application terminal instruction having been sent from a first standard software kit of an application terminal to the internet-of-vehicles platform;
determining (S3)
a vehicle terminal control instruction corresponding to the device terminal instruction by a second standard software kit according to an execution file, the execution file being obtained by the second standard software kit parsing a model definition file sent by the internet-of-vehicles platform; and
controlling, (S4)
according to the vehicle terminal control instruction, a corresponding target controller to execute a corresponding control operation.

7. The vehicle terminal remote control method according to claim 1, wherein, after receiving the application terminal instruction sent by the first standard software kit of the application terminal, encryption validation is performed on the application terminal instruction, comprising:
receiving an encrypted application terminal instruction obtained by the first standard software kit of the application terminal encrypting a generated application terminal instruction according to an asymmetric cryptographic algorithm;
validating the encrypted application terminal instruction according to the asymmetric cryptographic algorithm; and
if the encrypted application terminal instruction passes validation, executing the step of determining the device terminal instruction and the target device terminal corresponding to the application terminal instruction according to the target mapping relationship.

8. The vehicle terminal remote control method according to claim 7, wherein the step of sending the device terminal instruction to the target device terminal so as to control a second standard software kit in the target device terminal to determine a vehicle terminal control instruction corresponding to the device terminal instruction on the basis of an execution file in the target device terminal comprises:
encrypting the device terminal instruction by the asymmetric cryptographic algorithm;
sending an encrypted device terminal instruction to the target device terminal;
controlling the target device terminal to validate the encrypted device terminal instruction based on the asymmetric cryptographic algorithm; and
if the encrypted device terminal instruction passes validation, controlling the second standard software kit in the target device terminal to determine the vehicle terminal control instruction corresponding to the device terminal instruction on the basis of the execution file in the target device terminal.

9. A vehicle terminal remote control system, applied to an internet-of-vehicles platform, and comprising:
an application terminal instruction receiving module (501), configured to receive an application terminal instruction sent by a first standard software kit of an application terminal;
a device terminal instruction determining module (502), configured to determine a device terminal instruction and a target device terminal corresponding to the application terminal instruction according to a target mapping relationship;
a device terminal instruction sending module (503), configured to send the device terminal instruction to the target device terminal so as to control a second standard software kit in the target device terminal to determine a vehicle terminal control instruction corresponding to the device terminal instruction on the basis of an execution file in the target device terminal;
a model definition file determining module, configured to construct respective device terminal object models corresponding to vehicle models so as to obtain respective model definition files corresponding to the vehicle models; and
a model definition file sending module, configured to send, according to vehicle models corresponding to the respective model definition files respectively, the respective model definition files to second standard software kits of device terminals in the respective corresponding vehicle models so as to let the respective model definition files be parsed to obtain execution files in the respective device terminals.

10. A vehicle terminal remote control system, applied to a target device terminal, and comprising:
a device terminal instruction receiving module, configured to receive a device terminal instruction from an internet-of-vehicles platform, wherein the device terminal instruction has been determined based on a corresponding application terminal instruction having been sent from a first standard software kit of an application terminal to the internet-of-vehicles platform;
a vehicle terminal control instruction determining module, configured to determine a vehicle terminal control instruction corresponding to the device terminal instruction by a second standard software kit according to an execution file, the execution file being obtained by the second standard software kit parsing a model definition file sent by the internet-of-vehicles platform; and
a control module, configured to control, according to the vehicle terminal control instruction, a corresponding target controller to execute a corresponding control operation.

11. An electronic device, comprising a memory, a processor, and a computer program stored in the memory and executable on the processor, wherein the computer program, when executed by the processor, causes the processor to perform the vehicle terminal remote control method of any one of Claims 1 to 8.

12. A computer-readable storage medium, having a computer program stored therein, wherein the computer program, when executed by a processor, causes the processor to perform the vehicle terminal remote control method of any one of Claims 1 to 8.

## Patentansprüche

1. Verfahren zur Fernsteuerung eines Fahrzeugendgeräts, angewandt auf eine Internet-der-Fahrzeuge-Plattform, umfassend:
Empfangen (S1)
einer von einem ersten Standardsoftware-Kit eines Anwendungsendgeräts gesendeten Anwendungsendgeräteanweisung;
Bestimmen (S2)
einer Geräteendgeräteanweisung und eines Ziel-Geräteendgeräts, die der Anwendungsendgeräteanweisung entsprechen, gemäß einer Ziel-Zuordnungsbeziehung;
Senden (S3)
der Geräteendgeräteanweisung an das Ziel-Geräteendgerät, um ein zweites Standardsoftware-Kit in dem Ziel-Geräteendgerät derart zu steuern, dass dieses auf der Grundlage einer Ausführungsdatei in dem Ziel-Geräteendgerät eine der Geräteendgeräteanweisung entsprechende Fahrzeugendgeräte-Steueranweisung bestimmt; und
Steuern eines Ziel-Steuergeräts in dem Ziel-Geräteendgerät zur Ausführung einer entsprechenden Steueroperation gemäß der Fahrzeugendgeräte-Steueranweisung;
wobei das Verfahren vor dem Empfangen der von dem ersten Standardsoftware-Kit des Anwendungsendgeräts gesendeten Anwendungsendgeräteanweisung ferner umfasst:
Aufbauen jeweiliger, Fahrzeugmodellen entsprechender Geräteendgeräte-Objektmodelle, um jeweilige, den Fahrzeugmodellen entsprechende Modelldefinitionsdateien zu erhalten; und
Senden der jeweiligen Modelldefinitionsdateien gemäß den den jeweiligen Modelldefinitionsdateien jeweils entsprechenden Fahrzeugmodellen an zweite Standardsoftware-Kits von Geräteendgeräten in den jeweils entsprechenden Fahrzeugmodellen, sodass die jeweiligen Modelldefinitionsdateien analysiert werden, um Ausführungsdateien in den jeweiligen Geräteendgeräten zu erhalten.

2. Verfahren zur Fernsteuerung eines Fahrzeugendgeräts nach Anspruch 1, wobei das Verfahren vor dem Empfangen der von dem ersten Standardsoftware-Kit des Anwendungsendgeräts gesendeten Anwendungsendgeräteanweisung ferner umfasst:
Bestimmen einer dem Fahrzeugmodell entsprechenden Liste von Fernsteuerungsfunktionen und Fahrzeugzustandsabfragefunktionen gemäß einem dem Anwendungsendgerät entsprechenden Fahrzeugmodell;
Bestimmen einer Anweisungsliste für das Fahrzeugmodell gemäß der Liste von Fernsteuerungsfunktionen und Fahrzeugzustandsabfragefunktionen; und
Erstellen von Anwendungsendgeräte-Funktionscodes des Anwendungsendgeräts gemäß der Anweisungsliste und Senden der Anwendungsendgeräte-Funktionscodes an das erste Standardsoftware-Kit, das in ein Ziel-Anwendungsprogramm des Anwendungsendgeräts integriert ist.

3. Verfahren zur Fernsteuerung eines Fahrzeugendgeräts nach Anspruch 2, wobei der Schritt des Bestimmens einer Geräteendgeräteanweisung und eines Ziel-Geräteendgeräts, die der Anwendungsendgeräteanweisung entsprechen, gemäß einer Ziel-Zuordnungsbeziehung umfasst:
Gewinnen eines Anweisungscodes und eines Fahrzeugidentifikationscodes aus der Anwendungsendgeräteanweisung durch Analysieren der Anwendungsendgeräteanweisung;
Bestimmen der dem Anweisungscode entsprechenden Geräteendgeräteanweisung gemäß der Ziel-Zuordnungsbeziehung, wobei die Ziel-Zuordnungsbeziehung eine Eins-zu-eins-Entsprechungsbeziehung zwischen jeweiligen Anweisungscodes und jeweiligen Geräteendgeräteanweisungen ist; und
Bestimmen des dem Fahrzeugidentifikationscode entsprechenden Ziel-Geräteendgeräts gemäß dem Fahrzeugidentifikationscode.

4. Verfahren zur Fernsteuerung eines Fahrzeugendgeräts nach Anspruch 3, wobei der Schritt des Steuerns eines zweiten Standardsoftware-Kits in dem Ziel-Geräteendgerät zum Bestimmen einer der Geräteendgeräteanweisung entsprechenden Fahrzeugendgeräte-Steueranweisung auf der Grundlage einer Ausführungsdatei in dem Ziel-Geräteendgerät umfasst:
Steuern des zweiten Standardsoftware-Kits in dem Ziel-Geräteendgerät, um auf der Grundlage der Ausführungsdatei in dem Ziel-Geräteendgerät einen der Geräteendgeräteanweisung entsprechenden Fahrzeugendgeräte-Anweisungscode und eine dem Fahrzeugendgeräte-Anweisungscode entsprechende Ausführungsbedingung zu bestimmen; und
Erzeugen der entsprechenden Fahrzeugendgeräte-Steueranweisung auf der Grundlage des Fahrzeugendgeräte-Anweisungscodes, wenn die Ausführungsbedingung die Validierung durch das zweite Standardsoftware-Kit besteht.

5. Verfahren zur Fernsteuerung eines Fahrzeugendgeräts nach Anspruch 4, ferner umfassend:
Empfangen eines von dem zweiten Standardsoftware-Kit gemeldeten Fehlercodes, wobei der Fehlercode von dem die Fahrzeugendgeräte-Steueranweisung ausführenden Ziel-Steuergerät zurückgemeldet wird; und
Bestimmen eines dem Fehlercode entsprechenden Ausführungsergebnisses gemäß dem Fehlercode und Melden des Ausführungsergebnisses an das Anwendungsendgerät.

6. Verfahren zur Fernsteuerung eines Fahrzeugendgeräts, angewandt auf ein Ziel-Geräteendgerät, umfassend:
Empfangen (S3) einer Geräteendgeräteanweisung von einer Internet-der-Fahrzeuge-Plattform, wobei die Geräteendgeräteanweisung auf der Grundlage einer entsprechenden Anwendungsendgeräteanweisung bestimmt worden ist, und wobei die entsprechende Anwendungsendgeräteanweisung von einem ersten Standardsoftware-Kit eines Anwendungsendgeräts an die Internet-der-Fahrzeuge-Plattform gesendet worden ist;
Bestimmen (S3) einer der Geräteendgeräteanweisung entsprechenden Fahrzeugendgeräte-Steueranweisung durch ein zweites Standardsoftware-Kit gemäß einer Ausführungsdatei, wobei die Ausführungsdatei dadurch erhalten wird, dass das zweite Standardsoftware-Kit eine von der Internet-der-Fahrzeuge-Plattform gesendete Modelldefinitionsdatei analysiert; und
Steuern (S4) eines entsprechenden Ziel-Steuergeräts gemäß der Fahrzeugendgeräte-Steueranweisung, um eine entsprechende Steueroperation auszuführen.

7. Verfahren zur Fernsteuerung eines Fahrzeugendgeräts nach Anspruch 1, wobei nach dem Empfangen der von dem ersten Standardsoftware-Kit des Anwendungsendgeräts gesendeten Anwendungsendgeräteanweisung eine Verschlüsselungsvalidierung der Anwendungsendgeräteanweisung durchgeführt wird, umfassend:
Empfangen einer verschlüsselten Anwendungsendgeräteanweisung, die dadurch erhalten wird, dass das erste Standardsoftware-Kit des Anwendungsendgeräts eine erzeugte Anwendungsendgeräteanweisung gemäß einem asymmetrischen kryptographischen Algorithmus verschlüsselt;
Validieren der verschlüsselten Anwendungsendgeräteanweisung gemäß dem asymmetrischen kryptographischen Algorithmus; und
Ausführen des Schritts des Bestimmens der Geräteendgeräteanweisung und des Ziel-Geräteendgeräts, die der Anwendungsendgeräteanweisung entsprechen, gemäß der Ziel-Zuordnungsbeziehung, wenn die verschlüsselte Anwendungsendgeräteanweisung die Validierung besteht.

8. Verfahren zur Fernsteuerung eines Fahrzeugendgeräts nach Anspruch 7, wobei der Schritt des Sendens der Geräteendgeräteanweisung an das Ziel-Geräteendgerät, um ein zweites Standardsoftware-Kit in dem Ziel-Geräteendgerät derart zu steuern, dass dieses auf der Grundlage einer Ausführungsdatei in dem Ziel-Geräteendgerät eine der Geräteendgeräteanweisung entsprechende Fahrzeugendgeräte-Steueranweisung bestimmt, umfasst:
Verschlüsseln der Geräteendgeräteanweisung mittels des asymmetrischen kryptographischen Algorithmus;
Senden einer verschlüsselten Geräteendgeräteanweisung an das Ziel-Geräteendgerät;
Steuern des Ziel-Geräteendgeräts, um die verschlüsselte Geräteendgeräteanweisung auf der Grundlage des asymmetrischen kryptographischen Algorithmus zu validieren; und
Steuern des zweiten Standardsoftware-Kits in dem Ziel-Geräteendgerät, um auf der Grundlage der Ausführungsdatei in dem Ziel-Geräteendgerät die der Geräteendgeräteanweisung entsprechende Fahrzeugendgeräte-Steueranweisung zu bestimmen, wenn die verschlüsselte Geräteendgeräteanweisung die Validierung besteht.

9. System zur Fernsteuerung eines Fahrzeugendgeräts, angewandt auf eine Internet-der-Fahrzeuge-Plattform, umfassend:
ein Anwendungsendgeräteanweisungs-Empfangsmodul (501), das dazu eingerichtet ist, eine von einem ersten Standardsoftware-Kit eines Anwendungsendgeräts gesendete Anwendungsendgeräteanweisung zu empfangen;
ein Geräteendgeräteanweisungs-Bestimmungsmodul (502), das dazu eingerichtet ist, gemäß einer Ziel-Zuordnungsbeziehung eine Geräteendgeräteanweisung und ein Ziel-Geräteendgerät, die der Anwendungsendgeräteanweisung entsprechen, zu bestimmen;
ein Geräteendgeräteanweisungs-Sendemodul (503), das dazu eingerichtet ist, die Geräteendgeräteanweisung an das Ziel-Geräteendgerät zu senden, um ein zweites Standardsoftware-Kit in dem Ziel-Geräteendgerät derart zu steuern, dass dieses auf der Grundlage einer Ausführungsdatei in dem Ziel-Geräteendgerät eine der Geräteendgeräteanweisung entsprechende Fahrzeugendgeräte-Steueranweisung bestimmt;
ein Modelldefinitionsdatei-Bestimmungsmodul, das dazu eingerichtet ist, jeweilige, Fahrzeugmodellen entsprechende Geräteendgeräte-Objektmodelle aufzubauen, um jeweilige, den Fahrzeugmodellen entsprechende Modelldefinitionsdateien zu erhalten; und
ein Modelldefinitionsdatei-Sendemodul, das dazu eingerichtet ist, die jeweiligen Modelldefinitionsdateien gemäß den den jeweiligen Modelldefinitionsdateien jeweils entsprechenden Fahrzeugmodellen an zweite Standardsoftware-Kits von Geräteendgeräten in den jeweils entsprechenden Fahrzeugmodellen zu senden, sodass die jeweiligen Modelldefinitionsdateien analysiert werden, um Ausführungsdateien in den jeweiligen Geräteendgeräten zu erhalten.

10. System zur Fernsteuerung eines Fahrzeugendgeräts, angewandt auf ein Ziel-Geräteendgerät, umfassend:
ein Geräteendgeräteanweisungs-Empfangsmodul, das dazu eingerichtet ist, eine Geräteendgeräteanweisung von einer Internet-der-Fahrzeuge-Plattform zu empfangen, wobei die Geräteendgeräteanweisung auf der Grundlage einer entsprechenden Anwendungsendgeräteanweisung bestimmt worden ist, und wobei die entsprechende Anwendungsendgeräteanweisung von einem ersten Standardsoftware-Kit eines Anwendungsendgeräts an die Internet-der-Fahrzeuge-Plattform gesendet worden ist;
ein Fahrzeugendgerätesteueranweisungs-Bestimmungsmodul, das dazu eingerichtet ist, mittels eines zweiten Standardsoftware-Kits gemäß einer Ausführungsdatei eine der Geräteendgeräteanweisung entsprechende Fahrzeugendgeräte-Steueranweisung zu bestimmen, wobei die Ausführungsdatei dadurch erhalten wird, dass das zweite Standardsoftware-Kit eine von der Internet-der-Fahrzeuge-Plattform gesendete Modelldefinitionsdatei analysiert; und
ein Steuermodul, das dazu eingerichtet ist, gemäß der Fahrzeugendgeräte-Steueranweisung ein entsprechendes Ziel-Steuergerät zu steuern, um eine entsprechende Steueroperation auszuführen.

11. Elektronische Vorrichtung, umfassend einen Speicher, einen Prozessor und ein in dem Speicher gespeichertes und auf dem Prozessor ausführbares Computerprogramm, wobei das Computerprogramm, wenn es durch den Prozessor ausgeführt wird, den Prozessor veranlasst, das Verfahren zur Fernsteuerung eines Fahrzeugendgeräts nach einem der Ansprüche 1 bis 8 auszuführen.

12. Computerlesbares Speichermedium, in dem ein Computerprogramm gespeichert ist, wobei das Computerprogramm, wenn es durch einen Prozessor ausgeführt wird, den Prozessor veranlasst, das Verfahren zur Fernsteuerung eines Fahrzeugendgeräts nach einem der Ansprüche 1 bis 8 auszuführen.

## Revendications

1. Procédé de commande à distance d'un terminal de véhicule, appliqué à une plateforme de l'Internet des véhicules, comprenant les étapes suivantes :
recevoir (S1)
une instruction de terminal d'application envoyée par un premier kit de logiciels standard d'un terminal d'application ;
déterminer (S2)
une instruction de terminal de dispositif et un terminal de dispositif cible correspondant à l'instruction de terminal d'application selon une relation de mappage cible ;
envoyer (S3)
l'instruction de terminal de dispositif au terminal de dispositif cible de manière à commander, dans le terminal de dispositif cible, un deuxième kit de logiciels standard pour déterminer une instruction de commande de terminal de véhicule correspondant à l'instruction de terminal de dispositif sur la base d'un fichier exécutable dans le terminal de dispositif cible ; et
commander un contrôleur cible dans le terminal de dispositif cible pour exécuter une opération de commande correspondante conformément à l'instruction de commande de terminal de véhicule ;
dans lequel, préalablement à la réception de l'instruction de terminal d'application envoyée par le premier kit de logiciels standard du terminal d'application, le procédé comprend en outre les étapes suivantes :
construire des modèles d'objets de terminal de dispositif respectifs correspondant à des modèles de véhicules de manière à obtenir des fichiers de définition de modèles respectifs correspondant aux modèles de véhicules ; et
envoyer, conformément aux modèles de véhicules correspondant respectivement auxdits fichiers de définition de modèles respectifs, lesdits fichiers de définition de modèles respectifs à des deuxièmes kits de logiciels standard de terminaux de dispositif dans les modèles de véhicules respectifs correspondants de manière à ce que lesdits fichiers de définition de modèles respectifs soient analysés pour obtenir des fichiers exécutables dans les terminaux de dispositif respectifs.

2. Procédé de commande à distance d'un terminal de véhicule selon la revendication 1, dans lequel, préalablement à la réception de l'instruction de terminal d'application envoyée par le premier kit de logiciels standard du terminal d'application, le procédé comprend en outre les étapes suivantes :
déterminer, conformément à un modèle de véhicule correspondant au terminal d'application, une liste de fonctions de commande à distance et de fonctions d'interrogation d'état de véhicule correspondant au modèle de véhicule ;
déterminer, conformément à la liste de fonctions de commande à distance et de fonctions d'interrogation d'état de véhicule, une liste d'instructions pour le modèle de véhicule ; et
construire, conformément à la liste d'instructions, des codes de fonctions de terminal d'application du terminal d'application, et envoyer lesdits codes de fonctions de terminal d'application au premier kit de logiciels standard intégré dans un programme d'application cible du terminal d'application.

3. Procédé de commande à distance d'un terminal de véhicule selon la revendication 2, dans lequel l'étape de détermination d'une instruction de terminal de dispositif et d'un terminal de dispositif cible correspondant à l'instruction de terminal d'application selon une relation de mappage cible comprend :
obtenir, par analyse de l'instruction de terminal d'application, un code d'instruction et un code d'identification de véhicule à partir de l'instruction de terminal d'application ;
déterminer l'instruction de terminal de dispositif correspondant au code d'instruction selon la relation de mappage cible, la relation de mappage cible étant une relation de correspondance biunivoque entre des codes d'instruction respectifs et des instructions de terminal de dispositif respectives ; et
déterminer, conformément au code d'identification de véhicule, le terminal de dispositif cible correspondant au code d'identification de véhicule.

4. Procédé de commande à distance d'un terminal de véhicule selon la revendication 3, dans lequel l'étape de commande d'un deuxième kit de logiciels standard dans le terminal de dispositif cible pour déterminer une instruction de commande de terminal de véhicule correspondant à l'instruction de terminal de dispositif sur la base d'un fichier exécutable dans le terminal de dispositif cible comprend :
commander le deuxième kit de logiciels standard dans le terminal de dispositif cible pour déterminer, sur la base du fichier exécutable dans le terminal de dispositif cible, un code d'instruction de terminal de véhicule correspondant à l'instruction de terminal de dispositif et une condition d'exécution correspondant au code d'instruction de terminal de véhicule ; et
si la condition d'exécution est validée par le deuxième kit de logiciels standard, générer l'instruction de commande de terminal de véhicule correspondante sur la base du code d'instruction de terminal de véhicule.

5. Procédé de commande à distance d'un terminal de véhicule selon la revendication 4, comprenant en outre :
recevoir un code d'erreur rapporté par le deuxième kit de logiciels standard, le code d'erreur étant renvoyé par le contrôleur cible exécutant l'instruction de commande de terminal de véhicule ; et
déterminer un résultat d'exécution correspondant au code d'erreur conformément au code d'erreur, et rapporter le résultat d'exécution au terminal d'application.

6. Procédé de commande à distance d'un terminal de véhicule, appliqué à un terminal de dispositif cible, et comprenant les étapes suivantes :
recevoir (S3) une instruction de terminal de dispositif provenant d'une plateforme de l'Internet des véhicules, ladite instruction de terminal de dispositif ayant été déterminée sur la base d'une instruction de terminal d'application correspondante ayant été envoyée d'un premier kit de logiciels standard d'un terminal d'application à la plateforme de l'Internet des véhicules ;
déterminer (S3)
une instruction de commande de terminal de véhicule correspondant à l'instruction de terminal de dispositif par un deuxième kit de logiciels standard conformément à un fichier exécutable, le fichier exécutable étant obtenu par le deuxième kit de logiciels standard analysant un fichier de définition de modèle envoyé par la plateforme de l'Internet des véhicules ; et
commander (S4),
conformément à l'instruction de commande de terminal de véhicule, un contrôleur cible correspondant pour exécuter une opération de commande correspondante.

7. Procédé de commande à distance d'un terminal de véhicule selon la revendication 1, dans lequel, après réception de l'instruction de terminal d'application envoyée par le premier kit de logiciels standard du terminal d'application, une validation par chiffrement est effectuée sur l'instruction de terminal d'application, comprenant les étapes suivantes :
recevoir une instruction de terminal d'application chiffrée obtenue par le premier kit de logiciels standard du terminal d'application chiffrant une instruction de terminal d'application générée conformément à un algorithme cryptographique asymétrique ;
valider l'instruction de terminal d'application chiffrée conformément à l'algorithme cryptographique asymétrique ; et
si l'instruction de terminal d'application chiffrée est validée, exécuter l'étape de détermination de l'instruction de terminal de dispositif et du terminal de dispositif cible correspondant à l'instruction de terminal d'application selon la relation de mappage cible.

8. Procédé de commande à distance d'un terminal de véhicule selon la revendication 7, dans lequel l'étape d'envoi de l'instruction de terminal de dispositif au terminal de dispositif cible de manière à commander un deuxième kit de logiciels standard dans le terminal de dispositif cible pour déterminer une instruction de commande de terminal de véhicule correspondant à l'instruction de terminal de dispositif sur la base d'un fichier exécutable dans le terminal de dispositif cible comprend :
chiffrer l'instruction de terminal de dispositif par l'algorithme cryptographique asymétrique ;
envoyer une instruction de terminal de dispositif chiffrée au terminal de dispositif cible ;
commander le terminal de dispositif cible pour valider l'instruction de terminal de dispositif chiffrée sur la base de l'algorithme cryptographique asymétrique ; et
si l'instruction de terminal de dispositif chiffrée est validée, commander le deuxième kit de logiciels standard dans le terminal de dispositif cible pour déterminer l'instruction de commande de terminal de véhicule correspondant à l'instruction de terminal de dispositif sur la base du fichier exécutable dans le terminal de dispositif cible.

9. Système de commande à distance d'un terminal de véhicule, appliqué à une plateforme de l'Internet des véhicules, comprenant les étapes suivantes :
un module de réception d'instruction de terminal d'application (501), configuré pour recevoir une instruction de terminal d'application envoyée par un premier kit de logiciels standard d'un terminal d'application ;
un module de détermination d'instruction de terminal de dispositif (502), configuré pour déterminer une instruction de terminal de dispositif et un terminal de dispositif cible correspondant à l'instruction de terminal d'application selon une relation de mappage cible ;
un module d'envoi d'instruction de terminal de dispositif (503), configuré pour envoyer l'instruction de terminal de dispositif au terminal de dispositif cible de manière à commander un deuxième kit de logiciels standard dans le terminal de dispositif cible pour déterminer une instruction de commande de terminal de véhicule correspondant à l'instruction de terminal de dispositif sur la base d'un fichier exécutable dans le terminal de dispositif cible ;
un module de détermination de fichier de définition de modèle, configuré pour construire des modèles d'objets de terminal de dispositif respectifs correspondant à des modèles de véhicules de manière à obtenir des fichiers de définition de modèles respectifs correspondant aux modèles de véhicules ; et
un module d'envoi de fichier de définition de modèle, configuré pour envoyer, conformément aux modèles de véhicules correspondant respectivement auxdits fichiers de définition de modèles respectifs, lesdits fichiers de définition de modèles respectifs à des deuxièmes kits de logiciels standard de terminaux de dispositif dans les modèles de véhicules respectifs correspondants de manière à ce que lesdits fichiers de définition de modèles respectifs soient analysés pour obtenir des fichiers exécutables dans les terminaux de dispositif respectifs.

10. Système de commande à distance d'un terminal de véhicule, appliqué à un terminal de dispositif cible, et comprenant les étapes suivantes :
un module de réception d'instruction de terminal de dispositif, configuré pour recevoir une instruction de terminal de dispositif provenant d'une plateforme de l'Internet des véhicules, ladite instruction de terminal de dispositif ayant été déterminée sur la base d'une instruction de terminal d'application correspondante ayant été envoyée d'un premier kit de logiciels standard d'un terminal d'application à la plateforme de l'Internet des véhicules ;
un module de détermination d'instruction de commande de terminal de véhicule, configuré pour déterminer une instruction de commande de terminal de véhicule correspondant à l'instruction de terminal de dispositif par un deuxième kit de logiciels standard conformément à un fichier exécutable, le fichier exécutable étant obtenu par le deuxième kit de logiciels standard analysant un fichier de définition de modèle envoyé par la plateforme de l'Internet des véhicules ; et
un module de commande, configuré pour commander, conformément à l'instruction de commande de terminal de véhicule, un contrôleur cible correspondant pour exécuter une opération de commande correspondante.

11. Dispositif électronique, comprenant une mémoire, un processeur et un programme d'ordinateur stocké dans la mémoire et exécutable sur le processeur, dans lequel le programme d'ordinateur, lorsqu'il est exécuté par le processeur, amène le processeur à mettre en œuvre le procédé de commande à distance d'un terminal de véhicule selon l'une quelconque des revendications 1 à 8.

12. Support de stockage lisible par ordinateur, dans lequel est stocké un programme d'ordinateur, le programme d'ordinateur, lorsqu'il est exécuté par un processeur, amenant le processeur à mettre en œuvre le procédé de commande à distance d'un terminal de véhicule selon l'une quelconque des revendications 1 à 8.
